Europäisches Patentamt

(19) European Patent Office (11) Publication number: **0 003 637**

Office européen des brevets **B1**

(12) **EUROPEAN PATENT SPECIFICATION**

(45) Date of publication of patent specification: **15.07.81** (51) Int. Cl.³: **A 01 D 53/08, B 60 V 1/00, A 01 D 35/262**

(21) Application number: **79300040.7**

(22) Date of filing: **10.01.79**

(54) **Rotary lawn mowers.**

(30) Priority: **13.02.78 GB 562778**

(43) Date of publication of application:
**22.08.79 Bulletin 79/17**

(45) Publication of the grant of the European patent:
**15.07.81 Bulletin 81/28**

(84) Designated Contracting States:
**BE CH DE FR IT NL**

(56) References cited:
**CH - A - 443 763
DE - A - 2 337 721
DE - B - 1 263 385
GB - A - 1 448 539**

(73) Proprietor: **QUALCAST (LAWN MOWERS)
LIMITED
Coleridge Street
Sunnyhill Derby DE3 7JT (GB)**

(72) Inventor: **Jaworek, Stefan Alojzy
Hoylake Court
Mickleover Derby (GB)**
Inventor: **Bounds, Philip
144 Albert Road
Chaddesden Derby (GB)**

(74) Representative: **Sanders, Peter Colin Christopher
BROOKES & MARTIN High Holborn House 52/54
High Holborn
London WC1V 6SE (GB)**

Courier Press, Leamington Spa, England.

## Rotary Lawn Mowers

This invention relates to a rotary scythe lawn mower which, in use, is supported on a cushion of air.

Such mowers will generally include a motor for driving the rotary cutter and an air impeller to provide the cushion of air. The motor is normally supported on the deck of a generally domed-shaped housing and is surrounded by a protective shroud. The impeller then induces a flow of air into the housing through a central opening in the roof of the housing located beneath the motor. In one known arrangement, a bottom portion of the protective shroud is cut away to provide an air inlet.

It is preferable in such mowers to provide a cooling air flow over the motor while it is running. In the past this problem has generally been solved either by mounting a separate fan above the motor, or by diverting over the motor a proportion of the air drawn into the shroud by the main impeller. In the latter case, however, it has been necessary to design a specific impeller with two sets of vanes for drawing air through respective openings in the dome-shaped housing, one of these openings communicating with a duct within which the motor is located for example, as disclosed in GB—A—1448539.

In accordance with the present invention there is provided a lawnmower comprising a generally dome-shaped housing surrounding an air impeller and a rotary cutter, the impeller and the cutter being driven by a motor supported above a central opening in the roof of the housing, the motor being substantially enclosed by a protective shroud having at least two independent air intakes characterised in that a first of the independent intakes communicates with the top of a central inner duct of the shroud, the duct surrounding the motor and terminating at or just above the central opening; the bottom of the duct having a smaller diameter than that of the opening such that an annular gap is formed between the bottom of the duct and the perimeter of the opening, the annular gap communicating with the second air intake such that air drawn through the second intake passes through the annular gap and merges with the flow of air emerging from the duct in a region where the flow of air is in a direction substantially parallel to the axis of rotation of the impeller.

The first air intake is preferably located near the top of the shroud at a level above that of the second intake, both intakes being spaced above the roof of the dome-shaped housing such that air flows downwardly from each intake to the central opening in the housing.

The resulting air flow system provides cooling of the motor without necessarily requiring either an auxiliary fan or an auxiliary set of fan blades.

The downward flow of air within the shroud and the merging of the two independent air flows upstream of the impeller also assists the flow of air into the theoretical zero velocity region at the intake point of the impeller blades.

For a better understanding of the invention one example of a lawnmower embodying the invention will now be described with reference to the accompanying drawings in which:

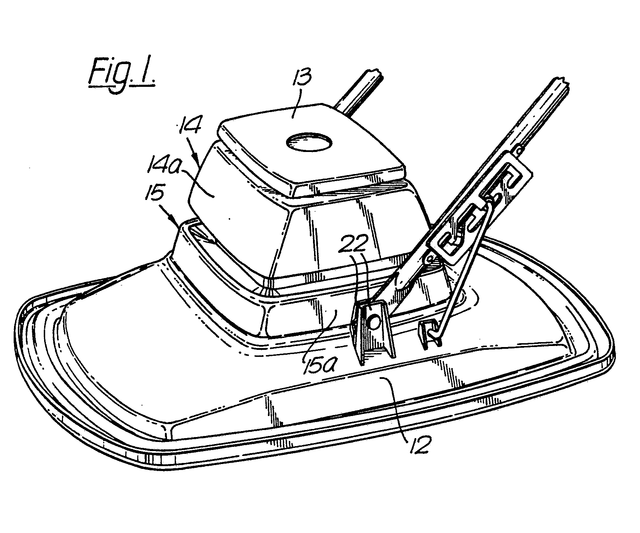

FIG. 1 is a perspective view of a lawnmower embodying the invention, and

FIG. 2 shows on the left hand side, one half of a front elevation view partly broken away to reveal internal parts, and, on the right hand side, one half of a transverse sectional view through the centre of the mower shown in Fig. 1.

Referring to these figures, a motor 10 is supported on the flattened top or deck 11 of a generally dome-shaped housing 12. The motor is surrounded by a 3-piece shroud consisting of a top section 13, a middle section 14 and a bottom section 15.

The motor has an output shaft 16 carrying an impeller 17 and a cutter 18 (shown only partially). The impeller includes a number of angularly spaced radially extending blades 19 which rotate beneath a central opening 20 in the deck 11. The body of the motor 10 is secured to the deck 11 by means of an end bracket 23, and includes a hollow, rectangular, laminated stator core with field windings wound around the longitudinal sides of the core to form a 2-pole motor. A hole is provided at each corner of the rectangular core so that the stack of laminations can be riveted or bolted to the end bracket 23.

The middle section 14 of the shroud is moulded in one piece and includes four downwardly and inwardly converging inner side walls 14c forming an inner duct of substantially rectangular cross-section, the walls being joined to one another at each corner by substantially vertical buttress-like projections 31. Each corner projection 31 includes a base 32 which is fastened to the bottom section 15 of the shroud and to the motor end bracket 23 by means of a single fastener (not shown). Alternatively, the middle and bottom section of the shroud could be secured directly to the deck 11 of the housing 12. The top of the middle section 14 is folded over to provide a top wall 14b and an outer side wall 14a in the form of a downwardly flared skirt surrounding the top half of the inner duct.

The bottom section 15 of the shroud includes an outer side wall 15a aligned with the outer side wall 14a of the middle section, an inner side wall 15e and a top wall consisting of two substantially level portions 15b and 15d interconnected by a downwardly and inwardly inclined portion 15c.

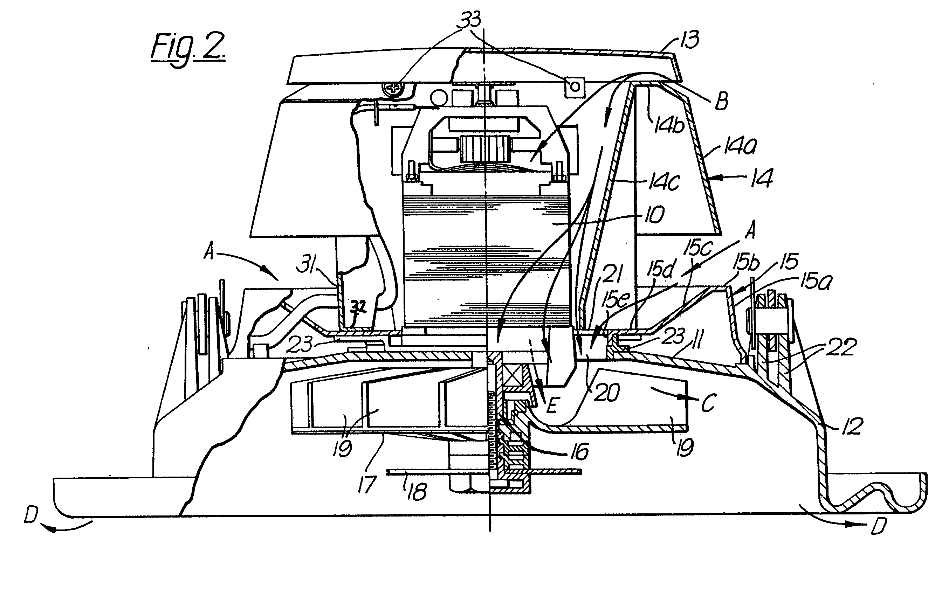

The top section 13 of the shroud is formed in a similar manner with four internal supporting legs, a flat top and an outwardly flared skirt, the four legs being secured to the centre section 14 by means of fasteners 33 (only two of which are visible in Fig. 2.).

As the impeller rotates, most of the air sucked into the opening 20 in the deck 11 is drawn through the gap between the middle section 14 and the bottom section 15 of the motor shroud. This air flows along the path indicated by the arrows A without undergoing any sharp change in direction. By the time the air has reached the gap 21 between inner side wall 14c and the inner side wall 15e, it already has a vertical component of velocity.

However, a significant proportion of the total air flow through the opening 20 is drawn through the gap between the top section 13 and the centre section 14 of the shroud. This portion of the air flows in the direction of the arrow B and passes through the centre of the hollow core between the two windings as well as over the sides of the windings in the passage formed between the windings and the inner duct of the centre shroud section. This stream of cooling air over the motor allows the motor to be run at its optimum rating without overheating so that, to achieve a given lift, it is possible to run a smaller, less powerful motor at its optimum rating rather than a larger (and therefore heavier) motor below its optimum rating.

It can be seen therefore that the positioning of the gaps between the shroud sections at different levels above the deck 11 of the housing 12 provides a flow of air which is moving in a direction substantially parallel with the axis of rotation of the impeller 17 before it reaches the central opening 20 in the deck 11. The air therefore tumbles into the theoretical zero velocity region E at the centre of the impeller, and the impeller blades then force air outwards in the direction of arrow C. As is well known, rotation of the impeller blades, with the bottom edge of the housing 12 close to the ground, will produce a central cushion of air bounded by a turbulent air curtain, the turbulent air escaping in the direction of the arrows D beneath the rim of the housing.

The bottom section 15 of the motor shroud also provides a barrier between the central opening 20 and any grass cuttings which may have accumulated on the upper surface of the housing 12.

The housing 12 is also provided with handle-mounting brackets 22 at each side.

## Claims

1. A lawnmower comprising a generally dome-shaped housing (12) surrounding an air impeller (17) and a rotary cutter (18), the impeller and the cutter being driven by a motor (10) supported above a central opening (20) in the roof of the housing (12), the motor being substantially enclosed by a protective shroud (13,14,15.) having at least two independent air intakes (A,B), characterised in that a first (B) of the independent intakes communicates with the top of a central inner duct (14c) of the shroud, the duct surrounding the motor (10) and terminating at or just above the central opening (20); the bottom of the duct having a smaller diameter than that of the opening (20) such that an annular gap (21) is formed between the bottom of the duct and the perimeter of the opening (20), the annular gap communicating with the second air intake (A) such that air drawn through the second intake passes through the annular gap and merges with the flow of air emerging from the duct in a region where the flow of air is in a direction substantially parallel to the axis of rotation of the impeller (17).

2. A lawnmower according to claim 1 in which the first (B) intake is spaced above the second (A) intake, and the second intake is spaced above the roof of the housing (12) whereby air flows downwardly form each intake to the central opening (20).

3. A lawnmower according to Claim 2 in which the first (B) intake is formed between a roof section (13) and a central section (14) of the shroud (13,14,15), and the second (A) intake is formed between the central section (14) and the bottom section (15) of the shroud.

4. A lawnmower according to Claim 3 in which the said duct (14c) forms an integral part of the central section of the shroud.

## Patentansprüche

1. Rasenmäher dadurch gekennzeichnet, daß er ein im allgemeinen kuppelförmiges Gehäuse (12) umfaßt, das ein Luftflügelrad (17) und eine rotierende Schneidvorrichtung (18) umgibt, wobei das Flügelrad und die Schneidvorrichtung durch einen Motor (10) angetrieben werden, der uber einer mittigen Öffnung (20) in der oberen Abdeckung des Gehäuses (12) abgestützt wird, wobei der Motor im wesentlichen von einer Schutzhaube (13,14,15) eingeschlossen wird, die wenigstens zwei voneinander unabhängige Lufteinlässe (A, B) besitzt, die dadurch gekennzeichnet sind, daß der eine erste (B) Einlaß der unabhängigen Einlässe mit dem Oberteil eines mittleren inneren Kanals (14c) der Haube in Verbindung steht, wobei der Kanal den Motor (10) umgibt und an der oder unmittelbar über der mittigen Öffnung (20) abschließt; ferner dadurch gekennzeichnet, daß der untere Teil des Kanals einen kleineren Durchmesser als den Durchmesser der Öffnung (20) hat so daß ein ringförmiger Zwischenraum (21) zwischen dem unteren Teil des Kanals und der äußeren Begrenzung der Öffnung (20) gebildet wird, wobei der ringförmige Zwischenraum mit dem zweiten Lufteinlaß (A) auf eine solche Weise in Verbindung steht, daß Luft, die durch den zweiten Lufteinlaß eingezogen wird, durch den ringförmigen Zwischenraum passiert und sich mit dem Luftstrom vermischt, der aus dem Kanal in einer Region austritt, in der der Luftstrom eine Richtung hat, die im wesentlichen parallel zur Drehachse des Flügelrades (17) verläuft.

2. Rasenmäher nach Anspruch 1 dadurch gekennzeichnet, daß der erste (B) Einlaß mit Zwischenraum über dem zweiten (A) Einlaß angeordnet ist und daß der zweite Einlaß mit Zwischenraum über der oberen Abdeckung des Gehäuses (12) angeordnet ist, wodurch Luft von jedem Einlaß nach unten zur mittigen Öffnung (20) strömt.

3. Rasenmäher nach Anspruch 2 dadurch gekennzeichnet, daß der erste (B) Einlaß zwischen einem Abdeckteil (13) und einem mittleren Teil (14) der Haube (13,14,15) gebildet wird und daß der zweite (A) Einlaß zwischen dem mittleren Teil (14) und dem unteren Teil (15) der Haube gebildet wird.

4. Rasenmäher nach Anspruch 3 dadurch gekennzeichnet, daß der besagte Kanal (14c) einen integralen Bestandteil des mittleren Teils der Haube bildet.

## Revendications

1. Tondeuse à gazon, comprenant un carter (12) ayant la forme générale d'un dôme et entourant un rotor à air (17) et un couteau rotatif (18), le rotor et le couteau étant entraînés par un moteur (10) supporté au dessus d'une ouverture centrale (20) existant dans la plate-forme du carter (12), ce moteur étant essentiellement entouré par un blindage protecteur (13, 14, 15) comportant au moins deux entrées d'air indépendantes (A,B), cette tondeuse étant caractérisée en ce qu'une première entrée indépendante (B) communique avec le haut d'un conduit interne central (14c) du blindage, ce conduit entourant le moteur (10) et se terminant à l'ouverture centrale (20) ou juste au-dessus de celle-ci, la base du conduit ayant un plus petit diamètre que celui de l'ouverture (20), de sorte qu'un intervalle annulaire (21) est formé entre la base du conduit et le périmètre de l'ouverture (20), cet intervalle annulaire communiquant avec la seconde entrée d'air (A) de sorte que l'air aspiré par cette seconde entrée traverse l'intervalle d'air et se combine avec la circulation d'air sortant du conduit, dans une zone où la circulation d'air se fait dans une direction essentiellement parallèle à l'axe de rotation du rotor (17).

2. Tondeuse à gazon suivant la revendication 1, caractérisée en ce que la première entrée d'air (B) se trouve au-dessus et à l'écart de la seconde entrée (A), celle-ci étant espacée au-dessus de la plate-forme du carter (12), de sorte que l'air circule de manière descendante depuis chaque entrée vers l'ouverture centrale (20).

3. Tondeuse à gazon suivant la revendication 2, caractérisée en ce que la première entrée d'air (B) est créée entre une pièce supérieure (13) et une pièce centrale (14) du blindage (13, 14, 15), et la seconde entrée (A) est formée entre la pièce centrale (14) et la pièce inférieure (15) de ce blindage.

4. Tondeuse à gazon suivant la revendication 3, caractérisée en ce que le conduit susdit (14c) est fait d'une pièce avec la pièce centrale du blindage.

Fig. 1.

*Fig.2.*

0 003 637